(19) Europäisches Patentamt
European Patent Office
Office européen des brevets

(11) EP 4 086 309 A1

(12) **EUROPEAN PATENT APPLICATION**
published in accordance with Art. 153(4) EPC

(43) Date of publication:
**09.11.2022 Bulletin 2022/45**

(21) Application number: **20908611.5**

(22) Date of filing: **24.12.2020**

(51) International Patent Classification (IPC):
***C08L 69/00*** *(2006.01)* ***C08L 51/04*** *(2006.01)*
***C08L 25/12*** *(2006.01)* ***C08L 87/00*** *(2006.01)*
***C08L 71/00*** *(2006.01)* ***C08L 77/00*** *(2006.01)*
***C08K 3/22*** *(2006.01)*

(52) Cooperative Patent Classification (CPC):
**C08K 3/22; C08L 25/12; C08L 51/04; C08L 69/00; C08L 71/00; C08L 77/00; C08L 87/00**

(86) International application number:
**PCT/KR2020/019093**

(87) International publication number:
**WO 2021/137529 (08.07.2021 Gazette 2021/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2019 KR 20190180026**

(71) Applicant: **Lotte Chemical Corporation**
**Seoul, 05551 (KR)**

(72) Inventors:
- **HONG, Jaekeun**
**Uiwang-si, Gyeonggi-do 16073 (KR)**
- **KWON, Keehae**
**Uiwang-si, Gyeonggi-do 16073 (KR)**
- **KIM, Doo Young**
**Uiwang-si, Gyeonggi-do 16073 (KR)**
- **RYOO, Heekyoung**
**Uiwang-si, Gyeonggi-do 16073 (KR)**

(74) Representative: **Germain Maureau**
**12, rue Boileau**
**69006 Lyon (FR)**

(54) **THERMOPLASTIC RESIN COMPOSITION, AND MOLDED PRODUCT PRODUCED THEREFROM**

(57) Provided are a thermoplastic resin composition and a molded product produced therefrom, and the thermoplastic resin composition includes 100 parts by weight of a base resin including (A) 65 to 85 wt% of a polycarbonate resin, (B) 7 to 20 wt% of an acrylic rubber-modified aromatic vinyl-based graft copolymer, and (C) 7 to 20 wt% of an aromatic vinyl-vinyl cyanide copolymer; (D) 0.7 to 5 parts by weight of zinc oxide (ZnO); and (E) 7 to 15 parts by weight of a block copolymer including a polyether segment and a polyamide segment, wherein the (D) zinc oxide has an average particle diameter of 0.5 to 3 μm, a peak position 2 θ value obtained by X-ray diffraction (XRD) analysis of 35 to 37 °, and a crystallite size according to Equation 1 of 1,000 to 2,000 Å. Equation 1 is the same as disclosed in the specification.



Processed by Luminess, 75001 PARIS (FR)

## Description

### [Technical Field]

A thermoplastic resin composition and a molded product produced therefrom are disclosed.

### [Background Art]

A polycarbonate (PC) resin is one of engineering plastics and is a material that is widely used in the plastics industry.

The polycarbonate resin has a glass transition temperature (Tg) of about 150 °C due to a bulk molecular structure, such as bisphenol-A, which shows high heat resistance and may be an amorphous polymer having excellent transparency.

Furthermore, although having excellent impact resistance and compatibility with other resins, the polycarbonate resin has a drawback of low fluidity, so it is frequently used in a form of an alloy with various resins for complementing moldability and post-processability.

An acrylate-styrene-acrylonitrile (ASA) resin has excellent weather resistance and light resistance, and thus is widely used for outdoor building materials, vehicle interior/exterior materials, etc. However, since the ASA resin has insufficient impact resistance and the like, in order to be applied for the uses requiring high impact strength, an acrylic rubbery polymer content of the ASA resin should be increased, but when the acrylic rubbery polymer content is increased, heat resistance and the like are deteriorated, and accordingly, the ASA resin has a limit in being applied for the use requiring high heat resistance properties, for example, the automobile interior/exterior materials, etc.

Accordingly, a method of alloying the polycarbonate resin and the ASA resin to secure excellent heat resistance, impact resistance, weather resistance, and light resistance has been suggested, and this PC/ASA resin may be applied to various interior/exterior materials for automobiles.

However, this PC/ASA resin may be yellowed over time of use, and on the surface thereof, various bacteria may highly possibly grow. In order to further reinforce the weather resistance and the light resistance and improve antibacterial properties and the like, a method of adding an additive such as an antibacterial agent, a weathering stabilizer, and the like to the PC/ASA resin may be considered, but compatibility, impact resistance, and the like may be deteriorated, and in addition, a gas silver streak and the like may be generated on a molded product due to decomposition of the resin during the injection molding.

Accordingly, development of a thermoplastic resin composition having excellent antibacterial properties, antistatic properties, weather resistance, light resistance, impact resistance, heat resistance, appearance characteristics, and the like is required.

### [Disclosure]

### [Description of the Drawings]

[Technical Problem]

Provided is a thermoplastic resin composition having all improved antibacterial properties, antistatic properties, weather resistance, light resistance, impact resistance, heat resistance, and appearance characteristics.

Another embodiment provides a molded product produced from the thermoplastic resin.

### [Technical Solution]

According to an embodiment, a thermoplastic resin composition includes: 100 parts by weight of a base resin including (A) 65 to 85 wt% of a polycarbonate resin, (B) 7 to 20 wt% of an acrylic rubber-modified aromatic vinyl-based graft copolymer, and (C) 7 to 20 wt% of an aromatic vinyl-vinyl cyanide copolymer; (D) 0.7 to 5 parts by weight of zinc oxide (ZnO); and (E) 7 to 15 parts by weight of a block copolymer including a polyether segment and a polyamide segment, wherein the (D) zinc oxide has an average particle diameter of 0.5 to 3 μm, a peak position 2θ value obtained by X-ray diffraction (XRD) analysis of 35 to 37 °, and a crystallite size of 1,000 to 2,000 Å according to Equation 1.

[Equation 1]

$$\text{Crystallite size} = \frac{\kappa\lambda}{\beta\cos\theta}$$

In Equation 1, k is a shape factor, $\lambda$ is an X-ray wavelength, $\beta$ is a FWHM value (degree) of an X-ray diffraction peak, and $\theta$ is a peak position value (degree).

The (D) zinc oxide may have a BET specific surface area of 1 to 10 $m^2/g$.

The (D) zinc oxide may have a size ratio (B/A) of a peak A in a 370 to 390 nm region to a peak B in a 450 to 600 nm region of 0.01 to 1 when measuring photoluminescence.

The (A) polycarbonate resin may have a melt flow index of 5 to 40 g/10 min, which is measured under the condition of 250 °C and a 10 kg load according to the ASTM D1238 standard.

In the (B) acrylic rubber-modified aromatic vinyl-based graft copolymer, the acrylic rubbery polymer may have an average particle diameter of 100 to 500 nm.

The (B) acrylic rubber-modified aromatic vinyl-based graft copolymer may be obtained by graft polymerization of a monomer mixture including an aromatic vinyl compound and a vinyl cyanide compound to 40 to 60 wt% of an acrylic rubbery polymer.

The (B) acrylic rubber-modified aromatic vinyl-based graft copolymer may be an acrylonitrile-styrene-acrylate graft copolymer.

The (C) aromatic vinyl-vinyl cyanide copolymer may be a copolymer of a monomer mixture including 60 to 85 wt% of an aromatic vinyl-based compound and 15 to 40 wt% of a vinyl cyanide-based compound.

The (C) aromatic vinyl-vinyl cyanide copolymer may have a melt flow index of 1 to 15 g/10 min measured under the condition of 200 °C and a 5 kg load according to ASTM D1238 standard.

The (C) aromatic vinyl-vinyl cyanide copolymer may be a styrene-acrylonitrile copolymer.

The (E) block copolymer including the polyether segment and the polyamide segment may include a polyethylene glycol segment, a polypropylene glycol segment, a polytetramethylene glycol segment, a polytetrahydrofuran segment, or a combination thereof as the polyether segment.

The (E) block copolymer including the polyether segment and the polyamide segment may include a polyamide 6 segment, a polyamide 66 segment, a polyamide 46 segment, a polyamide 11 segment, a polyamide 12 segment, a polyamide 610 segment, a polyamide 612 segment, a polyamide 61 segment, a polyamide 6T segment, a polyamide 4T segment, a polyamide 410 segment, a polyamide 510 segment, a polyamide 1010 segment, a polyamide 10T segment, a polyamide 1212 segment, a polyamide 12T segment, or a combination thereof, as the polyamide segment.

The (E) block copolymer including the polyether segment and the polyamide segment may have a melting point of 100 to 250 °C.

According to an embodiment, the thermoplastic resin composition may further include at least one additive selected from a flame retardant, a nucleating agent, a coupling agent, a filler, a plasticizer, an impact modifier, a lubricant, an antibacterial agent, a release agent, a heat stabilizer, an antioxidant, an ultraviolet (UV) stabilizer, a pigment, and a dye.

On the other hand, according to another embodiment, a molded product produced from the aforementioned thermoplastic resin composition is provided.

The molded product may have a notched Izod impact strength of 30 to 100 kgf·cm/cm for a 1/8"-thick specimen according to ASTM D256.

The molded product may have each antibacterial activity value of 2 to 7 which is obtained by inoculating Staphylococcus aureus and Escherichia coli, and measuring after 24 hours of incubation under the condition of 35 °C and relative humidity (RH) of 90% according to the JIS Z 2801 antibacterial evaluation method.

The molded product may have a volume resistance according to ASTM D257 of $5\times10^{11}$ to $5\times10^{13}$ $\Omega$mm.

The molded product may have a half-life of greater than 0 seconds and less than or equal to 10 seconds for a specimen having a size of 45 mm $\times$ 45 mm $\times$ 3.2 mm according to KS K 0555.

The molded product may have a gloss of 85 to 120 GU measured at a reflection angle of 60° according to ASTM D523.

**[Advantageous Effects]**

The thermoplastic resin composition and molded product produced therefrom may have all improved antibacterial properties, antistatic properties, weather resistance, light resistance, impact resistance, heat resistance, appearance characteristics, and the like.

**[Mode for Invention]**

Hereinafter, embodiments of the present invention are described in detail. However, these embodiments are exemplary, the present invention is not limited thereto and the present invention is defined by the scope of claims.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using a dynamic light scattering analysis equipment.

In the present specification, unless otherwise mentioned, the average particle diameter is a particle diameter (D50) corresponding to 50% of a weight percentage in a particle size distribution curve of single particles (particles do not aggregate to form secondary particles), which are measured by using a particle size analyzer (Laser Diffraction Particle Size Analyzer LS 13 320, Beckman Coulter, Inc.).

In the present specification, unless otherwise mentioned, the weight average molecular weight is measured by dissolving a powder sample in tetrahydrofuran (THF) and then performing gel permeation chromatography (GPC) with a 1200 series made by Agilent Technologies Inc. (a column is LF-804 made by Shodex and a standard sample is polystyrene made by Shodex).

In the present specification, unless otherwise mentioned, the specific surface area is measured using a nitrogen gas adsorption method, using a BET analysis device (Surface Area and Porosity Analyzer ASAP 2020, Micromeritics Instruments Co., Ltd.).

In the present specification, when a definition is not otherwise provided, "substituted" refers to replacement of hydrogen of a compound by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a vinyl group, a C1 to C20 alkyl group, a C2 to C20 alkenyl group, a C2 to C20 alkynyl group, a C6 to C30 aryl group, a C7 to C30 arylalkyl group, a C6 to C30 allyl group, a C1 to C30 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C3 to C30 heterocycloalkyl group, and a combination thereof.

In addition, "unsubstituted" means that a hydrogen atom remains as a hydrogen atom without being substituted with another substituent.

In addition, in the present specification, when a definition is not otherwise provided, "hetero" refers to one including 1 to 3 heteroatoms selected from N, O, S, P, and Si.

A thermoplastic resin composition according to an embodiment includes, 100 parts by weight of a base resin including (A) 65 to 85 wt% of a polycarbonate resin, (B) 7 to 20 wt% of an acrylic rubber-modified aromatic vinyl-based graft copolymer, and (C) 7 to 20 wt% of an aromatic vinyl-vinyl cyanide copolymer; (D) 0.7 to 5 parts by weight of zinc oxide (ZnO); and (E) 7 to 15 parts by weight of a block copolymer including a polyether segment and a polyamide segment.

Specifically, the (D) zinc oxide may have an average particle diameter of 0.5 to 3 $\mu$m, a peak position 2 $\theta$ value obtained by X-ray diffraction (XRD) analysis of 35 to 37 °, and a crystallite size according to Equation 1 of 1,000 to 2,000 Å.

[Equation1]

$$\text{Crystallite size} = \frac{\kappa\lambda}{\beta\cos\theta}$$

In Equation 1, k is a shape factor, $\lambda$ is an X-ray wavelength, $\beta$ is a FWHM value (degree) of an X-ray diffraction peak, and $\theta$ is a peak position value (degree).

Hereinafter, each component included in the thermoplastic resin composition will be described in detail.

**(A) Polycarbonate Resin**

The polycarbonate resin is a polyester having a repeating unit of a carbonate unit but has no particular limit in

its type, and may include any polycarbonate resin usable in the resin composition field.

For example, it may be prepared by reacting a diphenol compound represented by Chemical Formula 1 with a compound selected from phosgene, halogen acid esters, carbonate esters, and a combination thereof.

[Chemical Formula 1]

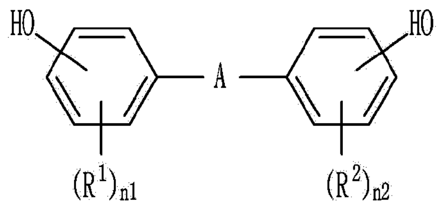

In Chemical Formula 1,

A is a linking group selected from a single bond, a substituted or unsubstituted C1 to C30 alkylene group, a substituted or unsubstituted C2 to C5 alkenylene group, a substituted or unsubstituted C2 to C5 alkylidene group, a substituted or unsubstituted C1 to C30 haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 alkoxylene group, a halogenic acid ester group, a carbonate ester group, $-Si(-R^{11})(-R^{12})$, -O-, -S-, and $-S(=O)_2-$, wherein $R^1$, $R^2$, $R^{11}$, and $R^{12}$ are each independently a substituted or unsubstituted C1 to C30 alkyl group or a substituted or unsubstituted C6 to C30 aryl group, and n1 and n2 are each independently an integer of 0 to 4.

Two or more types of the diphenol compounds represented by Chemical Formula 1 may be combined to constitute a repeating unit of the polycarbonate resin.

Specific examples of the diphenol compound may include hydroquinone, resorcinol, 4,4'-dihydroxydiphenyl, 2,2-bis(4-hydroxyphenyl)propane (also referred to as "bisphenol-A"), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. Among the diphenol compounds, 2,2-bis(4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, or 1,1-bis(4-hydroxyphenyl)cyclohexane may be desirably used. 2,2-bis(4-hydroxyphenyl)propane may be more desirably used.

The polycarbonate resin may be a mixture of copolymers obtained using two or more types of diphenol compound.

In addition, the polycarbonate resin may include a linear polycarbonate resin, a branched polycarbonate resin, a polycarbonate-polysiloxane copolymer resin, a polyester-polycarbonate copolymer resin, and the like.

Specific examples of the linear polycarbonate resin may be a bisphenol-A polycarbonate resin. Specific examples of the branched polycarbonate resin may be a resin prepared by reacting a multi-functional aromatic compound such as trimellitic anhydride, trimellitic acid, and the like with a diphenol compound and a carbonate. The polycarbonate-polysiloxane copolymer resin may include a resin prepared by reacting a siloxane compound having a hydroxyl group terminal end with a diphenol compound, and phosgene, halogen formate, diester carbonate, and the like.

The polyester-polycarbonate copolymer resin may be prepared by reacting bifunctional carboxylic acid with a diphenol compound and a carbonate, wherein the used carbonate may be a diaryl carbonate such as diphenyl carbonate or ethylene carbonate.

The polycarbonate resin may be prepared using an interfacial polymerization method (also called a solvent method (solvent polymerization) or a phosgene method), a melt polymerization method, or the like.

When the polycarbonate resin is prepared by a melt polymerization method, the transesterification reaction may be performed at a temperature of 150 to 300 °C, for example 160 to 280 °C, or specifically 190 to 260 °C under reduced pressure conditions of less than or equal to 100 torr, for example less than or equal to 75 torr, specifically, less than or equal to 30 torr, or more specifically less than or equal to 1 torr, for at least 10 minutes or more, for example, 15 minutes to 24 hours, or specifically 15 minutes to 12 hours. Within the above ranges, the reaction rate and side reactions may be desirably reduced, and gel formation may be reduced.

The reaction may be performed in the presence of a catalyst. As the catalyst, a catalyst used in a conventional transesterification reaction, for example, an alkali metal catalyst, an alkaline earth metal catalyst, etc. may be used. Examples of the alkali metal catalyst may include LiOH, NaOH, KOH, and the like, but are not limited thereto. These may be used alone or in mixture of 2 or more types. The content of the catalyst may be used in the range of $1 \times 10^{-8}$

to 1 × $10^{-3}$ mol, or for example, 1 × $10^{-7}$ to 1 × $10^{-4}$ mol per 1 mol of the diphenol compound. Sufficient reactivity may be obtained within the above range, and the generation of by-products due to side reactions may be minimized, thereby improving thermal stability and color tone stability.

When the polycarbonate resin is prepared in an interfacial polymerization method, although detailed reaction conditions may be variously adjusted, for example, the following method may be adopted: a reactant of diphenol compounds is dissolved or dispersed in caustic soda or potash of water, and the mixture to a water-immiscible solvent, so that the reactant may contact a carbonate precursor, for example, under controlled pH conditions of about 8 to about 10 and under presence of a triethylamine or phase transition catalyst and the like.

Examples of the water-immiscible solvent may include methylene chloride, 1,2-dichloroethane, chlorobenzene, toluene, and the like.

Examples of the carbonate precursor may include a carbonyl halide such as carbonyl bromide or carbonyl chloride, a haloformate such as bishaloformate of dihydric phenols (e.g., bischloroformate such as bisphenol A and hydroquinone) or a haloformate such as a bishaloformate of glycol (e.g., a bishaloformate such as ethylene glycol, neopentyl glycol, or polyethylene glycol).

Examples of the phase transfer catalyst may include $[CH_3(CH_2)_3]_4NX$, [CH3(CH2)3]4PX, $[CH_3(CH_2)_5]_4NX$, $[CH_3(CH_2)_6]_4NX$, $[CH_3(CH_2)_4]_4NX$, $CH_3[CH_3(CH_2)_3]_3NX$, $CH_3[CH_3(CH_2)_2]_3NX$, wherein X is selected from a halogen, a C1 to C8 alkoxy group, and a C6 to C18 aryloxy group), and the like.

The polycarbonate resin may have a weight average molecular weight of 10,000 to 200,000 g/mol, for example, 10,000 to 90,000 g/mol, for example 14,000 to 90,000 g/mol, for example 14,000 to 80,000 g/mol, for example 14,000 to 70,000 g/mol, for example 14,000 to 60,000 g/mol, for example 14,000 to 50,000 g/mol, or for example 14,000 to 40,000 g/mol. When the weight average molecular weight of the polycarbonate resin is within the above ranges, a molded product produced therefrom may obtain excellent impact resistance and fluidity.

The polycarbonate resin may have for example a melt flow index of 5 to 40 g/10 min, for example 8 to 40 g/10 min, for example 8 to 35 g/10 min, for example 10 to 35 g/10 min, or for example 10 to 33 g/10 min, which is measured under the condition of 250 °C and a 10 kg load according to ASTM D1238. When the polycarbonate resin having a melt flow index within the above range is used, a molded product produced therefrom may exhibit excellent impact resistance and fluidity.

The polycarbonate resin may be used by mixing two or more types of polycarbonate resins having different weight average molecular weights or melt flow indexes. By mixing and using polycarbonate resins of different weight average molecular weights or melt flow indexes, the thermoplastic resin composition may be controlled to have desired fluidity and/or impact resistance.

The polycarbonate resin may be included in an amount of 65 to 85 wt%, for example 70 to 85 wt%, for example 75 to 85 wt%, or for example 75 to 82 wt% based on 100 wt% of the base resin. When the amount of the polycarbonate resin is less than 65 wt%, mechanical strength and heat resistance of the thermoplastic resin composition and the molded product produced therefrom may be deteriorated, and when it exceeds 85 wt%, moldability and plating processability of the thermoplastic resin composition and the molded product produced therefrom may be deteriorated.

## (B) Acrylic Rubber-modified Aromatic Vinyl-based Graft Copolymer

The acrylic rubber-modified aromatic vinyl-based graft copolymer has a function of enhancing light resistance, weather resistance, and impact resistance of the thermoplastic resin composition by being alloyed with the polycarbonate resin.

In an embodiment, the acrylic rubber-modified aromatic vinyl-based graft copolymer may be prepared by graft polymerization of a monomer mixture including an aromatic vinyl compound and a vinyl cyanide compound to an acrylic rubbery polymer.

The acrylic rubber-modified aromatic vinyl-based graft copolymer may be prepared according to any preparation method known to those skilled in the art.

The preparation method may include conventional polymerization methods, for example, emulsion polymerization, suspension polymerization, solution polymerization, and bulk polymerization. As a non-limiting example, it may be prepared by a method including preparing an acrylic rubbery polymer, and then graft-polymerizing a monomer mixture including an aromatic vinyl compound and a vinyl cyanide compound may be on a core formed of one or more layers of the acrylic rubbery polymer to form one or more shell layers.

The acrylic rubbery polymer may be prepared using an acrylic monomer as a main monomer. The acrylic monomer may be one or more selected from ethyl acrylate, butyl acrylate, 2-ethylhexyl acrylate, and hexyl acrylate, but is not limited thereto.

The acrylic monomer may be copolymerized with one or more radically polymerizable other monomers. When copolymerized, an amount of the one or more radically polymerizable other monomers may be 1 to 30 wt%, or specifically 2 to 20 wt%, based on the total weight of the acrylic rubbery polymer.

The aromatic vinyl compound included in the shell layer may be at least one selected from styrene, α-methylstyrene, p-methylstyrene, pt-butylstyrene, 2,4-dimethylstyrene, chlorostyrene, vinyltoluene, and vinylnaphthalene, but is not limited thereto.

The vinyl cyanide compound included in the shell layer may be at least one selected from acrylonitrile, methacrylonitrile, and fumaronitrile, but is not limited thereto.

Based on total 100 wt% of the acrylic rubber-modified aromatic vinyl-based graft copolymer, the acrylic rubbery polymer may be included in an amount of 40 to 60 wt%, or for example 45 to 55 wt%.

In the shell layer formed by graft-polymerization of the monomer mixture including the aromatic vinyl compound and the vinyl cyanide compound to the acrylic rubbery polymer, the aromatic vinyl compound may be included in an amount of 50 to 80 wt%, or specifically 60 to 70 wt% based on the total weight of the shell layer and the vinyl cyanide compound may be included in an amount of 20 to 50 wt%, or specifically 30 to 40 wt%, based on the total weight of the shell layer.

In an embodiment, the acrylic rubber-modified aromatic vinyl-based graft copolymer may include an acrylate-styrene-acrylonitrile graft copolymer. For example, the acrylic rubber-modified aromatic vinyl-based graft copolymer may be an acrylate-styrene-acrylonitrile graft copolymer.

As a non-limiting example, the acrylate-styrene-acrylonitrile graft copolymer may be a core-shell type acrylate-styrene-acrylonitrile graft copolymer prepared by graft polymerization of a mixture of acrylonitrile and styrene, to two or more layers of an acrylic rubbery polymer core including an inner core made of a butyl acrylate polymer and an outer core made of copolymerized butyl acrylate and styrene, through an emulsion polymerization method.

In an embodiment, the acrylic rubber-modified aromatic vinyl-based graft copolymer may include the acrylic rubbery polymer having an average particle diameter of greater than or equal to 100 nm, for example less than or equal to 500 nm, for example less than or equal to 450 nm, for example less than or equal to 400 nm, for example less than or equal to 350 nm, for example less than or equal to 300 nm, for example less than or equal to 250 nm, for example less than or equal to 200 nm, for example 100 to 500 nm , for example 100 to 450 nm, for example 100 to 400 nm, for example 100 to 350 nm, for example 100 to 300 nm, for example 100 to 250 nm, or for example 100 to 200 nm.

When the average particle diameter of the acrylic rubbery polymer in the acrylic rubber-modified aromatic vinyl-based graft copolymer is less than 100 nm, overall mechanical properties such as impact resistance and tensile strength of the thermoplastic resin composition including the same may be deteriorated.

On the other hand, when the average particle diameter of the acrylic rubbery polymer in the acrylic rubber-modified aromatic vinyl-based graft copolymer exceeds 500 nm, fluidity and gloss of the thermoplastic resin composition including the same may be reduced.

The acrylic rubber-modified aromatic vinyl-based graft copolymer may be included in an amount of greater than or equal to 7 wt%, for example greater than or equal to 8 wt%, and for example less than or equal to 20 wt%, for example less than or equal to 15 wt%, for example 7 to 20 wt%, for example 8 to 20 wt%, or for example 8 to 15 wt% based on 100 wt% of the base resin.

When the content of the acrylic rubber-modified aromatic vinyl-based graft copolymer in the base resin is less than 7 wt%, impact resistance of the thermoplastic resin composition and molded product produced therefrom may be deteriorated, and when the content exceeds 20 wt%, the mechanical strength and coloring properties of the thermoplastic resin composition and molded product produced therefrom may be deteriorated.

## (C) Aromatic Vinyl-Vinyl Cyanide Copolymer

The aromatic vinyl-vinyl cyanide copolymer functions to maintain compatibility between components of the thermoplastic resin composition at a certain level.

In an embodiment, the aromatic vinyl-vinyl cyanide copolymer may be a copolymer of an aromatic vinyl-based compound and a vinyl cyanide-based compound. The aromatic vinyl-vinyl cyanide copolymer may have a weight average molecular weight of greater than or equal to 80,000 g/mol, for example greater than or equal to 85,000 g/mol, or for example greater than or equal to 90,000 g/mol, and for example less than or equal to 200,000 g/mol, or for example less than or equal to 150,000 g/mol, or for example 80,000 to 200,000 g/mol, or for example 80,000 to 150,000 g/mol.

In the present invention, the weight average molecular weight is measured by dissolving a powder sample in tetrahydrofuran (THF) and using 1200 series Gel Permeation chromatography (GPC) made by Agilent Technologies Inc. (using LF-804 made by Shodex as a column and polystyrene made by Shodex as a standard sample).

The aromatic vinyl-based compound may include at least one selected from aromatic vinyl compound selected from styrene, α-methylstyrene, p-methylstyrene, pt-butylstyrene, 2,4-dimethylstyrene, chlorostyrene, vinyltoluene, and vinylnaphthalene.

The vinyl cyanide-based compound may include at least one vinyl cyanide compound selected from acrylonitrile, methacrylonitrile, and fumaronitrile.

In an embodiment, the aromatic vinyl-vinyl cyanide copolymer may be a styrene-acrylonitrile copolymer (SAN)

having a weight average molecular weight of 80,000 to 200,000 g/mol.

In an embodiment, based on 100 wt% of the aromatic vinyl-vinyl cyanide copolymer, a component derived from the aromatic vinyl-based compound may be included in an amount of greater than or equal to 60 wt%, for example greater than or equal to 65 wt%, or for example greater than or equal to 70 wt%, and for example, less than or equal to 85 wt%, or for example, less than or equal to 80 wt%, or for example, 60 to 85 wt%, or for example, 60 to 80 wt%.

In an embodiment, based on 100 wt% of the aromatic vinyl-vinyl cyanide copolymer, a component derived from the vinyl cyanide-based compound may be included in an amount of greater than or equal to 10 wt%, for example greater than or equal to 15 wt%, or for example greater than or equal to 20 wt%, and for example, less than or equal to 40 wt%, for example, 15 to 40 wt%, or for example, 20 to 40 wt%.

In an embodiment, the aromatic vinyl-vinyl cyanide copolymer may have a melt flow index of greater than or equal to 1 g/10 min, greater than or equal to 1.5 g/10 min, greater than or equal to 2 g/10 min, and less than or equal to 15 g/10 min, less than or equal to 14 g/10 min, less than or equal to 13 g/10 min, less than or equal to 12 g/10 min, less than or equal to 11 g/10 min, or less than or equal to 10 g/10 min, for example 1 to 15 g/10 min, for example 1 to 14 g/10 min, for example 1 to 13 g/10 min, for example 1 to 12 g/10 min, for example 1 to 11 g/10 min, for example 1 to 10 g/10 min, which is measured under the condition of 200 °C and a 5 kg load according to ASTM D1238 standard.

In an embodiment, the aromatic vinyl-vinyl cyanide copolymer may be included in an amount of greater than or equal to 7 wt%, or for example greater than or equal to 8 wt%, and for example less than or equal to 20 wt%, for example less than or equal to 18 wt%, for example less than or equal to 15 wt%, or 7 to 20 wt%, for example 8 to 20 wt%, or for example 8 to 17 wt%, based on 100 wt% of the base resin.

When the content of the aromatic vinyl-vinyl cyanide copolymer is less than 7 wt%, mechanical strength and heat resistance of the thermoplastic resin composition and molded product produced therefrom may be deteriorated and when it exceeds 20 wt%, impact resistance and weather resistance of the thermoplastic resin composition and molded product produced therefrom may be deteriorated.

## (D) Zinc Oxide

The zinc oxide functions to impart antibacterial properties to a thermoplastic resin composition and a molded product produced therefrom and also, improving light resistance, weather resistance, impact resistance, heat resistance, and overall balance of physical properties.

In an embodiment, the zinc oxide may have an average particle diameter of greater than or equal to 0.5 μm, or for example greater than or equal to 0.8 μm, for example greater than or equal to 1 μm, for example less than or equal to 3 μm, for example less than or equal to 2.5 μm, or for example less than or equal to 2 μm, or for example 0.5 to 3 μm, for example 0.5 to 2.5 μm, for example 0.5 to 2 μm, or for example 0.8 to 2 μm.

When the zinc oxide has an average particle diameter out of the above range, antibacterial properties and/or appearance characteristics of a thermoplastic resin composition and a molded product produced therefrom may be greatly deteriorated.

In an embodiment, the zinc oxide may have a BET specific surface area of greater than or equal to 1 $m^2/g$, and for example less than or equal to 10 $m^2/g$, for example less than or equal to 9 $m^2/g$, for example less than or equal to 8 $m^2/g$, or for example less than or equal to 7 $m^2/g$, or for example 1 to 10 $m^2/g$, or for example 1 to 7 $m^2/g$.

When the BET specific surface area of the zinc oxide is out of the above range, light resistance, weather resistance, antibacterial properties, and the like of the thermoplastic resin composition and molded product produced therefrom may be deteriorated.

In an embodiment, the purity of the zinc oxide as measured with a residual weight at a temperature of 800 °C using TGA thermal analysis may be greater than or equal to 99%.

In an embodiment, the zinc oxide may have a peak position 2θ value obtained by X-ray diffraction (XRD) analysis of 35 to 37 °, and a crystallite size of 1,000 to 2,000 Å, or for example 1,200 to 1,800 Å, which is calculated based on the measured FWHM value (full width at half maximum of the diffraction peak) by applying to Scherrer's equation (Equation 1).

Specifically, the crystallite size may be measured by using a high resolution X-ray diffractometer (PRO-MRD, X'pert Paint Mixing Systems, Inc.) regardless of a specimen type (e.g., powder form, injection specimen). On the other hand, when an injection specimen is used, XRD may be more accurately analyzed by heat-treating the specimen at 600 °C in the air for 2 hours to remove a residual polymer resin.

When out of the above ranges, the light resistance, weather resistance, antibacterial properties, and the like of the thermoplastic resin composition and molded product produced therefrom may be deteriorated.

[Equation 1]

$$\text{Crystallite size} = \frac{\kappa\lambda}{\beta\cos\theta}$$

In Equation 1, k is a shape factor, $\lambda$ is an X-ray wavelength, $\beta$ is a FWHM value (degree) of an X-ray diffraction peak, and $\theta$ is a peak position value (degree).

In an embodiment, the zinc oxide may have various shapes, for example, a spherical shape, a plate shape, a rod shape, and a combination thereof. In an embodiment, the zinc oxide may have various shapes, for example, a spherical shape, a plate shape, a rod shape, and the like except for a needle shape.

In an embodiment, the zinc oxide may have a size ratio (B/A) of a peak A in a 370 to 390 nm region to a peak B in a 450 to 600 nm region when measuring photoluminescence, that is a PL size ratio of 0.01 to 1, for example 0.1 to 1, or specifically 0.1 to 0.5.

The photoluminescence may be measured by putting zinc oxide powder in a pelletizer with a diameter of 6 mm and compressing it to prepare a specimen in a flat state and then, irradiating the specimen by an He-Cd laser at a wavelength of 325 nm (30 mW, KIMMON KOHA) at room temperature and detecting a spectrum of light emitted therefrom with a CCD detector, wherein the CCD detector may be maintained at -70 °C.

Within the ranges, a thermoplastic resin composition and a molded product produced therefrom may exhibit excellent light resistance, weather resistance, and antibacterial properties.

In an embodiment, the zinc oxide may be prepared by melting metallic zinc and then, heating it at 850 to 1,000 °C, or for example, 900 to 950 °C to evaporate it, injecting oxygen gas thereinto, cooling it to 20 to 30 °C, and then, heating it at 400 to 900°C, or for example 500 to 800 °C for 30 minutes to 150 minutes, or for example, 60 minutes to 120 minutes.

In an embodiment, the zinc oxide may be included in an amount of 0.7 to 5 parts by weight, for example 0.8 to 5 parts by weight, for example 0.8 to 4.5 parts by weight, for example 1 to 4.5 parts by weight, or for example 1 to 4 parts by weight, based on 100 parts by weight of the base resin.

When the zinc oxide is included in an amount of less than 0.7 parts by weight, light resistance, weather resistance, antibacterial properties, impact resistance, and the like of a thermoplastic resin composition and a molded product produced therefrom may be deteriorated, while when the zinc oxide is included in an amount of greater than 5 parts by weight, weather resistance, light resistance, heat resistance, and the like of a thermoplastic resin composition and a molded product produced therefrom may be deteriorated.

**(E) Block Copolymer Including Polyether Segment and Polyamide Segment**

In an embodiment, the block copolymer including the polyether segment and the polyamide segment serves to add antistatic properties to a thermoplastic resin composition and a molded product using the same.

In an embodiment, the polyether segment constituting the block copolymer including the polyether segment and the polyamide segment may contain at least one or more functional groups, for example, two or more functional hydroxide groups. Examples of the polyether segment may include a polyethylene glycol segment, a polypropylene glycol segment, a polytetramethylene glycol segment, a polytetrahydrofuran segment, or a combination thereof, but are not necessarily limited thereto.

In an embodiment, based on 100 wt% of the block copolymer including the polyether segment and the polyamide segment, the polyether segment may be included in an amount of 5 to 85 wt%, for example 10 to 80 wt%, for example 20 to 80 wt%, for example 30 to 80 wt%, for example 40 to 80 wt%, for example 40 to 70 wt%, or for example 50 to 70 wt%.

Meanwhile, in an embodiment, the polyamide segment constituting the block copolymer including the polyether segment and the polyamide segment may include various polyamide segments, for example, an aromatic polyamide segment, an aliphatic polyamide segment, or a combination thereof. Examples of the polyamide segment may be a polyamide 6 segment, a polyamide 66 segment, a polyamide 46 segment, a polyamide 11 segment, a polyamide 12 segment, a polyamide 610 segment, a polyamide 612 segment, a polyamide 61 segment, a polyamide 6T segment, a polyamide 4T segment, a polyamide 410 segment, a polyamide 510 segment, a polyamide 1010 segment, a polyamide 10T segment, a polyamide 1212 segment, a polyamide 12T segment, or a combination thereof, but are not necessarily limited thereto.

In an embodiment, based on 100 wt% of the block copolymer including the polyether segment and the polyamide segment, the polyamide segment may be included in amount of 15 to 95 wt%, for example 20 to 90 wt%, for example

20 to 80 wt%, for example 20 to 70 wt%, for example 20 to 60 wt%, for example 30 to 60 wt%, or for example 30 to 50 wt%.

In an embodiment, the block copolymer including the polyether segment and the polyamide segment may have a melting point of 100 to 250 °C, for example 120 to 230 °C, for example 130 to 210 °C, for example 140 to 210 °C, for example 150 to 210 °C, for example 160 to 210 °C, for example 170 to 210 °C, for example 180 to 210 °C, for example 190 to 210 °C, for example 195 to 210 °C, or for example 200 to 205 °C.

In an embodiment, the block copolymer including the polyether segment and the polyamide segment may be formed by block copolymerization of a polyethylene glycol segment and a polyamide 6 segment.

In an embodiment, the block copolymer including a polyether segment and a polyamide segment may be included in an amount of 7 to 15 parts by weight, for example 7 to 14 parts by weight, or for example 8 to 14 parts by weight based on 100 parts by weight of the base resin. When the content of the block copolymer including the polyether segment and the polyamide segment satisfies the above ranges, the thermoplastic resin composition and using the same molded product may exhibit excellent antistatic properties.

**(F) Additives**

In addition to the components (A) to (E), the thermoplastic resin composition according to an embodiment may further include one or more additives required in order to balance physical properties while maintaining excellent antibacterial properties, antistatic properties, weather resistance, light resistance, impact resistance, heat resistance, and appearance characteristics without deterioration of other properties, or one or more additives necessary according to a final use of the thermoplastic resin composition.

Specifically, the additives may include at least one additive selected from a flame retardant, a nucleating agent, a coupling agent, a filler, a plasticizer, an impact modifier, a lubricant, an antibacterial agent, a release agent, a heat stabilizer, an antioxidant, an ultraviolet (UV) stabilizer, a pigment, a dye, and the like and may be used alone or in a combination of two or more.

These additives may be appropriately included within a range that does not impair the physical properties of the thermoplastic resin composition, and specifically, may be included in an amount of less than or equal to 20 parts by weight based on 100 parts by weight of the base resin, but are not limited thereto.

On the other hand, the thermoplastic resin composition according to an embodiment may be mixed with other resin or other rubber component and used together.

Another embodiment provides a molded product produced using a thermoplastic resin composition according to an embodiment. The molded product may be prodcued by various methods known in the art, such as injection molding and extrusion molding using the thermoplastic resin composition.

The molded product may have a notched Izod impact strength of greater than or equal to 30 kgf·cm/cm, or for example greater than or equal to 31 kgf·cm/cm, and for example less than or equal to 100 kgf·cm/cm, for example less than or equal to 90 kgf·cm/cm, for example less than or equal to 80 kgf·cm/cm, or for example less than or equal to 70 kgf·cm/cm, or for example 30 to 100 kgf·cm/cm, for example 30 to 90 kgf·cm/cm, for example 30 to 80 kgf·cm/cm, or for example 31 to 70 kgf·cm/cm, for a 1/8"-thick specimen according to ASTM D256.

The molded product may have each antibacterial activity value of greater than or equal to 2, for example greater than or equal to 2.5, for example greater than or equal to 3, for example greater than or equal to 3.5, or for example greater than or equal to 4, and for example less than or equal to 7, or for example less than or equal to 6.5, or for example 2 to 7, for example 3 to 7, for example 4 to 7, or for example 4 to 6.5, which is obtained by inoculating Staphylococcus aureus and Escherichia coli, and measuring after 24 hours of incubation under the condition of 35 °C and relative humidity (RH) of 90% according to the JIS Z 2801 antibacterial evaluation method.

The molded product may have a volume resistance according to ASTM D257 of greater than or equal to $5\times10^{11}$ Ωmm, for example greater than or equal to $6\times10^{11}$ Ωmm, greater than or equal to $7\times10^{11}$ Ωmm, greater than or equal to $8\times10^{11}$ Ωmm, greater than or equal to $9\times10^{11}$ Ωmm, for example greater than or equal to $10^{12}$ Ωmm, for example greater than or equal to $2\times10^{12}$ Ωmm, for example greater than or equal to $3\times10^{12}$ Ωmm, or for example greater than or equal to $4\times10^{12}$ Ωmm, and for example less than or equal to $5\times10^{13}$ Ωmm, less than or equal to $4\times10^{13}$ Ωmm, less than or equal to $3\times10^{13}$ Ωmm, less than or equal to $2\times10^{13}$ Ωmm, for example less than or equal to $10^{13}$ Ωmm, for example less than or equal to $9\times10^{12}$ Ωmm, or for example less than or equal to $8\times10^{12}$ Ωmm, or for example $5\times10^{11}$ to $5\times10^{13}$ Ωmm, for example $10^{12}$ to $10^{13}$ Ωmm, for example $2\times10^{12}$ to $10^{13}$ Ωmm, or for example $3\times10^{12}$ to $9\times10^{12}$ Ωmm.

The molded product may have a half-life of greater than 0 seconds and less than or equal to 10 seconds, greater than 0 seconds and less than or equal to 9 seconds, greater than 0 seconds and less than or equal to 8 seconds, greater than 0 seconds and less than or equal to 7 seconds, greater than 0 seconds and less than or equal to 6 seconds, greater than 0 seconds and less than or equal to 5 seconds, 1 to 5 seconds, or 1 to 4 seconds., for a specimen having a size of 45 mm × 45 mm × 3.2 mm according to KS K 0555.

The molded product may have a gloss of greater than or equal to 85 GU, or for example greater than or equal

to 90 GU and for example less than or equal to 120 GU, or for example less than or equal to 110 GU, for example 85 to 120 GU, or for example 90 to 110 GU measured at a reflection angle of 60° according to ASTM D523.

As such, the molded product has improved impact resistance, antibacterial properties, and antistatic properties, as well as improved light resistance and weather resistance due to the acrylic rubber-modified aromatic vinyl-based graft copolymer, and thus may be advantageously used for various electrical and electronic parts, building materials, sporting goods, and automobile interior/exterior parts.

Hereinafter, the present invention is illustrated in more detail with reference to examples. These examples, however, are not in any sense to be interpreted as limiting the scope of the invention.

## Examples 1 to 7 and Comparative Examples 1 to 8

The thermoplastic resin compositions of Examples 1 to 7 and Comparative Examples 1 to 8 were prepared according to the component content ratios described in Tables 1 and 2, respectively.

In Tables 1 and 2, (A), (B), and (C), which are included in the base resin, are expressed in weight percent (wt%) based on the total weight of the base resin, and (D), (D'), and (E) which are added to the base resin, are expressed in parts by weight based on 100 parts by weight of the base resin.

The components shown in Tables 1 and 2 were dry-mixed, and quantitatively and continuously added into the feeding section (barrel temperature: about 260 °C) of a twin-screw extruder (L/D = 44, Φ = 35 mm), and melted/kneaded. Subsequently, after drying the thermoplastic resin compositions that were pelletized through a twin-screw extruder at about 80 °C for about 4 hours, specimens for physical property evaluation were produced, respectively, using a 6 oz injection molding machine set to a cylinder temperature of about 280 °C and a mold temperature of about 80 °C.

(Table 1)

| Components | | unit | Examples | | | | | | |
|---|---|---|---|---|---|---|---|---|---|
| | | | 1 | 2 | 3 | 4 | 5 | 6 | 7 |
| Base resin | (A) | wt% | 80 | 80 | 80 | 80 | 80 | 70 | 84 |
| | (B) | wt% | 10 | 10 | 10 | 10 | 10 | 15 | 8 |
| | (C) | wt% | 10 | 10 | 10 | 10 | 10 | 15 | 18 |
| (D) | | parts by weight | 1 | 2 | 2 | 2 | 4 | 1 | 1 |
| (D') | | parts by weight | 0 | 0 | 0 | 0 | 0 | 0 | 0 |
| (E) | | parts by weight | 9 | 9 | 11 | 13 | 13 | 9 | 9 |

(Table 2)

| Components | | unit | Comparative Examples | | | | | | | |
|---|---|---|---|---|---|---|---|---|---|---|
| | | | 1 | 2 | 3 | 4 | 5 | 6 | 7 | 8 |
| Base resin | (A) | wt% | 80 | 80 | 80 | 80 | 80 | 80 | 80 | 80 |
| | (B) | wt% | 10 | 10 | 10 | 10 | 10 | 10 | 10 | 10 |
| | (C) | wt% | 10 | 10 | 10 | 10 | 10 | 10 | 10 | 10 |
| (D) | | parts by weight | 0 | 0.5 | 1 | 1 | 0 | 8 | 8 | 0 |
| (D') | | parts by weight | 0 | 0 | 0 | 0 | 0 | 0 | 0 | 1 |
| (E) | | parts by weight | 0 | 0 | 0 | 5 | 11 | 11 | 20 | 9 |

### (A) Polycarbonate Resin

Polycarbonate resin (Lotte Advanced Materials Co., Ltd.) having a melt flow index of about 13 g/10 min measured under the condition of 250 °C and a 10 kg load according to ASTM D1238

(B) Acrylic Rubber-modified Aromatic Vinyl-based Graft Copolymer

An acrylonitrile-styrene-acrylate graft copolymer (Lotte Advanced Materials Co., Ltd.) in which a mixture of styrene and acrylonitrile is graft-copolymerized to 50 wt% of an acrylic rubbery polymer having an average particle diameter of about 140 nm

(C) Aromatic Vinyl-Vinyl Cyanide Copolymer

Styrene-acrylonitrile copolymer (Lotte Advanced Materials Co., Ltd.) having a melt flow index of about 8 g/10 min measured under the condition of 200 °C and a 5 kg load according to ASTM D1238 standard

(D) Zinc Oxide

Zinc oxide (Hanil Chemical Co., Ltd.) having specific gravity of 5.47 g/$cm^3$ to 5.64 g/$cm^3$, pH 6.95 to 7.37, an (absolute) refractive index of 1.94 to 2.11, an average particle diameter (D50) of about 1.2 μm, a BET specific surface area of about 4 $m^2$/g, purity of about 99%, a PL size ratio (B/A) of about 0.28, and a crystallite size of about 1,420 Å

(D') Zinc Oxide

Zinc oxide (Hanil Chemical Co., Ltd.) having an average particle diameter (D50) of about 3.7 μm, a BET specific surface area of about 14 $m^2$/g, purity of about 97%, a PL size ratio (B/A) of about 9.5, and a crystallite size of about 490 Å

(E) Block Copolymer Including Polyether Segment and Polyamide Segment

Block copolymer including a polyether segment and a polyamide segment and having sheet resistance of about $10^9$ Ω/sq and a melting point of about 203 °C (SANYO CHEMICAL Industries, Ltd.)

**Evaluation of Physical Properties**

Specimens for evaluating physical properties according to Examples 1 to 7 and Comparative Examples 1 to 8 were measured with respect to antibacterial properties, antistatic properties (volume resistance, half-life), impact resistance, and appearance characteristics, and the results are respectively shown in Tables 3 and 4.

(1) Antibacterial properties: According to a JIS Z 2801 antibacterial evaluation method, antibacterial activity of each injection specimen having a size of 45 mm × 45 mm × 3.2 mm was measured by inoculating Staphylococcus aureus and Escherichia coli into the specimen and culturing them for 24 hours at 35 °C under relative humidity (RH) of 90%.

(2-1) Antistatic properties (unit: Ωmm): According to ASTM D257, volume resistance of the specimen was measured by using a resistivity meter [Hiresta-UP (MCP-HT450), MITSUBISHI CHEMICAL, Inc.].

(2-2) Antistatic properties (unit: second): According to KS K 0555, five specimens with a size of 45 mm × 45 mm × 3.2 mm were measured with respect to half-life of the charged voltage by sequentially performing the methods described in ① to ⑤ below.

① Connect a half-life meter and a synchoscope or a recorder
② Set an applied voltage to ( + )10,000 V.
③ Adjust a distance from a tip of a precipitation electrode of the applied portion to the surface of a turntable to 20 mm and a distance from an electrode plate of the power-receiving portion to the surface of the turntable to 15 mm.
④ Remove electricity by attaching a specimen with the surface facing up to a mounting frame.
⑤ Apply 10,000 V to the specimen, while spinning the turntable and finish the application after 30 seconds and then, measure time (seconds) until the charged voltage was reduced to half while spinning the turntable.

(4) Impact Resistance (unit: kgf·cm/cm): According to ASTM D256, notched Izod impact strength of a 1/8"-thick specimen was measured.

(5) Appearance Characteristics (unit: GU): According to ASTM D523, gloss of a specimen with a size of 45 mm × 45 mm × 3.2 mm was measured at a reflection angle of 60 °.

(Table 3)

| Properties | | Examples | | | | | | |
|---|---|---|---|---|---|---|---|---|
| | | 1 | 2 | 3 | 4 | 5 | 6 | 7 |
| Antibacterial activity value | Staphylococcus aureus | 4.6 | 4.6 | 4.6 | 4.6 | 4.6 | 4.6 | 4.6 |
| | Escherichia coli | 6.2 | 6.2 | 6.2 | 4.2 | 4.2 | 4.1 | 4.2 |
| Volume resistance | | $7.6\times10^{12}$ | $7.9\times10^{12}$ | $3.3\times10^{12}$ | $5.1\times10^{12}$ | $5.4\times10^{12}$ | $7.7\times10^{12}$ | $7.7\times10^{12}$ |
| Half-life | | 3 | 3 | 3 | 2 | 2 | 3 | 3 |
| Impact strength | | 36.7 | 36.4 | 35.0 | 32.3 | 31.2 | 38.4 | 34.2 |
| Gloss | | 99 | 98 | 96 | 95 | 92 | 98 | 99 |

(Table 4)

| Properties | | Comparative Examples | | | | | | | |
|---|---|---|---|---|---|---|---|---|---|
| | | 1 | 2 | 3 | 4 | 5 | 6 | 7 | 8 |
| Antibacterial activity value | Staphylococcus aureus | 0 | 0 | 4.6 | 4.6 | 0 | 4.6 | 4.6 | 3.8 |
| | Escherichia coli | 0.4 | 0.4 | 3.6 | 4.2 | 0.4 | 6.2 | 6.2 | 3.9 |
| Volume resistance | | N/A | N/A | N/A | $10^{14}$ | $3.8\times10^{12}$ | $3.6\times10^{12}$ | $1.2\times10^{9}$ | $7.6\times10^{12}$ |
| Half-life | | 100 or more | 100 or more | 100 or more | 100 or more | 3 | 3 | 0.5 | 3 |
| Impact strength | | 42.8 | 43.1 | 42.9 | 42.9 | 35.1 | 20.3 | 4.8 | 33.5 |
| Gloss | | 100 | 99 | 99 | 98 | 100 | 86 | 85 | 74 |

In Table 4, "N/A" is (Not Applicable) data that specimens exhibited no antistatic properties and thus were immeasurable.

Referring to Tables 1 to 4, the specimens formed of the thermoplastic resin compositions of the example embodiments exhibited excellent antibacterial properties, antistatic properties, impact resistance, and appearance characteristics.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

**1.** A thermoplastic resin composition, comprising

100 parts by weight of a base resin including (A) 65 to 85 wt% of a polycarbonate resin;
(B) 7 to 20 wt% of an acrylic rubber-modified aromatic vinyl-based graft copolymer; and
(C) 7 to 20 wt% of an aromatic vinyl-vinyl cyanide copolymer,
(D) 0.7 to 5 parts by weight of zinc oxide (ZnO); and
(E) 7 to 15 parts by weight of a block copolymer including a polyether segment and a polyamide segment,
wherein the (D) zinc oxide has an average particle diameter of 0.5 to 3 $\mu$m, a peak position 2 $\theta$ value obtained by X-ray diffraction (XRD) analysis of 35 to 37 °, and a crystallite size according to Equation 1 of 1,000 to 2,000 Å:

[Equation1]

$$\text{Crystallite size} = \frac{\kappa\lambda}{\beta\cos\theta}$$

wherein in Equation 1, k is a shape factor, $\lambda$ is an X-ray wavelength, $\beta$ is a FWHM value (degree) of an X-ray diffraction peak, and $\theta$ is a peak position value (degree).

**2.** The thermoplastic resin composition of claim 1, wherein the (D) zinc oxide has a BET specific surface area of 1 to 10 $m^2$/g.

**3.** The thermoplastic resin composition of claim 1 or claim 2, wherein the (D) zinc oxide has a size ratio (B/A) of a peak A in a 370 to 390 nm region to a peak B in a 450 to 600 nm region of 0.01 to 1 when measuring photoluminescence.

**4.** The thermoplastic resin composition of any one of claim 1 to claim 3, wherein the (A) polycarbonate resin has a melt flow index of 5 to 40 g/10 min, which is measured under the condition of 250 °C and a 10 kg load according to the ASTM D1238 standard.

**5.** The thermoplastic resin composition of any one of claim 1 to claim 4, wherein in the (B) acrylic rubber-modified aromatic vinyl-based graft copolymer, the acrylic rubbery polymer has an average particle diameter of 100 to 500 nm.

**6.** The thermoplastic resin composition of any one of claim 1 to claim 5, wherein the (B) acrylic rubber-modified aromatic vinyl-based graft copolymer is obtained by graft polymerization of a monomer mixture including an aromatic vinyl compound and a vinyl cyanide compound to 40 to 60 wt% of an acrylic rubbery polymer.

**7.** The thermoplastic resin composition of any one of claim 1 to claim 6, wherein the (B) acrylic rubber-modified aromatic vinyl-based graft copolymer is an acrylonitrile-styrene-acrylate graft copolymer.

**8.** The thermoplastic resin composition of any one of claim 1 to claim 7, wherein the (C) aromatic vinyl-vinyl cyanide copolymer is a copolymer of a monomer mixture including 60 to 85 wt% of an aromatic vinyl-based compound and 15 to 40 wt% of a vinyl cyanide-based compound.

**9.** The thermoplastic resin composition of any one of claim 1 to claim 8, wherein the (C) aromatic vinyl-vinyl cyanide copolymer has a melt flow index of 1 to 15 g/10 min measured under the condition of 200 °C and a 5 kg load according to ASTM D1238 standard.

**10.** The thermoplastic resin composition of any one of claim 1 to claim 9, wherein the (C) aromatic vinyl-vinyl cyanide copolymer is a styrene-acrylonitrile copolymer.

**11.** The thermoplastic resin composition of any one of claim 1 to claim 10, wherein the (E) block copolymer including the polyether segment and the polyamide segment includes a polyethylene glycol segment, a polypropylene glycol segment, a polytetramethylene glycol segment, a polytetrahydrofuran segment, or a combination thereof, as the polyether segment.

**12.** The thermoplastic resin composition of any one of claim 1 to claim 11, wherein the (E) block copolymer including the polyether segment and the polyamide segment includes a polyamide 6 segment, a polyamide 66 segment, a polyamide 46 segment, a polyamide 11 segment, a polyamide 12 segment, a polyamide 610 segment, a polyamide 612 segment, a polyamide 61 segment, a polyamide 6T segment, a polyamide 4T segment, a polyamide 410 segment, a polyamide 510 segment, a polyamide 1010 segment, a polyamide 10T segment, a polyamide 1212 segment, a polyamide 12T segment, or a combination thereof, as the polyamide segment.

**13.** The thermoplastic resin composition of any one of claim 1 to claim 12, wherein the (E) block copolymer including the polyether segment and the polyamide segment has a melting point of 100 to 250 °C.

**14.** The thermoplastic resin composition of any one of claim 1 to claim 13, wherein the thermoplastic resin composition further includes at least one additive selected from a flame retardant, a nucleating agent, a coupling agent, a filler, a plasticizer, an impact modifier, a lubricant, an antibacterial agent, a release agent, a heat stabilizer, an antioxidant, an ultraviolet (UV) stabilizer, a pigment, and a dye.

**15.** A molded product produced from the thermoplastic resin composition of any one of claim 1 to claim 14.

**16.** The molded product of claim 15, wherein the molded product has a notched Izod impact strength of 30 to 100 kgf·cm/cm for a 1/8"-thick specimen according to ASTM D256.

**17.** The molded product of claim 15 or claim 16, wherein the molded product has each antibacterial activity value of 2 to 7 which is obtained by inoculating Staphylococcus aureus and Escherichia coli, and measuring after 24 hours of incubation under the condition of 35 °C and relative humidity (RH) of 90% according to the JIS Z 2801 antibacterial evaluation method.

**18.** The molded product of any one of claim 15 to claim 17, wherein the molded product has a volume resistance according to ASTM D257 of $5\times10^{11}$ to $5\times10^{13}$ Ωmm.

**19.** The molded product of any one of claim 15 to claim 18, wherein the molded product has a half-life of greater than 0 seconds and less than or equal to 10 seconds for a specimen having a size of 45 mm × 45 mm × 3.2 mm according to KS K 0555.

**20.** The molded product of any one of claim 15 to claim 19, wherein the molded product has a gloss of 85 to 120 GU measured at a reflection angle of 60 ° according to ASTM D523.

**INTERNATIONAL SEARCH REPORT**

International application No. **PCT/KR2020/019093**

**A. CLASSIFICATION OF SUBJECT MATTER**

**C08L 69/00**(2006.01)i; **C08L 51/04**(2006.01)i; **C08L 25/12**(2006.01)i; **C08L 87/00**(2006.01)i; **C08L 71/00**(2006.01)i; **C08L 77/00**(2006.01)i; **C08K 3/22**(2006.01)i

According to International Patent Classification (IPC) or to both national classification and IPC

**B. FIELDS SEARCHED**

Minimum documentation searched (classification system followed by classification symbols)

C08L 69/00(2006.01); C08F 279/04(2006.01); C08K 5/1515(2006.01); C08L 25/12(2006.01); C08L 51/04(2006.01); C08L 67/00(2006.01); C08L 9/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리카보네이트(polycarbonate), 아크릴로니트릴-스티렌-아크릴레이트 그라프트 공중합체(ASA), 스티렌-아크릴로니트릴 공중합체(SAN), 블록 공중합체(block copolymer), 산화아연(ZnO), 평균 입경(median diameter), 미소결정 크기(crystallite size)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1143239 B1 (SABIC GLOBAL TECHNOLOGIES B.V.) 18 May 2012 (2012-05-18) See paragraphs [0057], [0067], [0077] and [0078]; claim 1; and table 4. | 1-3 |
| Y | KR 10-2018-0077044 A (LOTTE ADVANCED MATERIALS CO., LTD.) 06 July 2018 (2018-07-06) See paragraphs [0064] and [0124]-[0127]; claims 1 and 5-7; and table 2. | 1-3 |
| A | US 2003-0166761 A1 (WEBER, M. et al.) 04 September 2003 (2003-09-04) See paragraphs [0144]-[0175]; and claim 1. | 1-3 |
| A | KR 10-2019-0125950 A (LOTTE ADVANCED MATERIALS CO., LTD.) 07 November 2019 (2019-11-07) See paragraphs [0158]-[0165]; claim 1; and table 3. | 1-3 |
| A | KR 10-0816474 B1 (CHEIL INDUSTRIES INC.) 26 March 2008 (2008-03-26) See entire document. | 1-3 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 April 2021** | **13 April 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2020/019093**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **16**
because they relate to parts of the international application that do not comply with the prescribed requirements to such an extent that no meaningful international search can be carried out, specifically:

Claim 16 refers to multiple dependent claims not meeting the requirement of PCT Rule 6.4(a).

3. ☑ Claims Nos.: **4-15, 17-20**
because they are dependent claims and are not drafted in accordance with the second and third sentences of Rule 6.4(a).

Form PCT/ISA/210 (continuation of first sheet) (July 2019)

**INTERNATIONAL SEARCH REPORT**
**Information on patent family members**

International application No.
**PCT/KR2020/019093**

| Patent document cited in search report | Publication date (day/month/year) | Patent family member(s) | Publication date (day/month/year) |
|---|---|---|---|
| KR 10-1143239 B1 | 18 May 2012 | AT 384766 T | 15 February 2008 |
| | | AU 2005-214316 A1 | 01 September 2005 |
| | | CN 1938379 A | 28 March 2007 |
| | | CN 1938379 B | 16 May 2012 |
| | | DE 602005004509 T2 | 22 January 2009 |
| | | EP 1713862 A1 | 25 October 2006 |
| | | EP 1713862 B1 | 23 January 2008 |
| | | ES 2300981 T3 | 16 June 2008 |
| | | JP 2007-520616 A | 26 July 2007 |
| | | JP 4768635 B2 | 07 September 2011 |
| | | US 2005-0171297 A1 | 04 August 2005 |
| | | WO 2005-080503 A1 | 01 September 2005 |
| KR 10-2018-0077044 A | 06 July 2018 | CN 110114405 A | 09 August 2019 |
| | | JP 2020-503402 A | 30 January 2020 |
| | | US 10829628 B2 | 10 November 2020 |
| | | US 2019-0322854 A1 | 24 October 2019 |
| | | WO 2018-124657 A1 | 05 July 2018 |
| US 2003-0166761 A1 | 04 September 2003 | AT 248204 T | 15 September 2003 |
| | | DE 19959410 A1 | 13 June 2001 |
| | | EP 1240250 A1 | 18 September 2002 |
| | | EP 1240250 B1 | 27 August 2003 |
| | | ES 2206337 T3 | 16 May 2004 |
| | | JP 2003-516456 A | 13 May 2003 |
| | | KR 10-2002-0062748 A | 29 July 2002 |
| | | MX PA02005636 A | 02 September 2002 |
| | | WO 01-42362 A1 | 14 June 2001 |
| KR 10-2019-0125950 A | 07 November 2019 | EP 3789453 A1 | 10 March 2021 |
| | | WO 2019-212222 A1 | 07 November 2019 |
| KR 10-0816474 B1 | 26 March 2008 | KR 10-2007-0102245 A | 18 October 2007 |

Form PCT/ISA/210 (patent family annex) (July 2019)